# EUROPÄISCHE PATENTSCHRIFT

(11) **EP 3 523 872 B1**
(45) Veröffentlichungstag und Bekanntmachung des Hinweises auf die Patenterteilung: **20.09.2023**
(21) Anmeldenummer: 17777904.8
(22) Anmeldetag: 02.10.2017
(51) Int. Cl.: H02K 3/28, H02K 3/12

(54) **SPULENWICKLUNG FÜR STATOREN ODER ROTOREN**
COIL WINDING FOR STATORS AND ROTORS
ENROULEMENT DE BOBINE POUR STATORS ET ROTORS

(30) Priorität: 05.10.2016 DE 102016118871
(43) Veröffentlichungstag der Anmeldung: 14.08.2019
(73) Patentinhaber: Schaeffler ELMOTEC STATOMAT GmbH, 61184 Karben (DE)
(72) Erfinder: SADIKU, Sadik, 63543 Neuberg (DE); WITWER, Keith, Markle, Indiana 46770 (US)
(74) Vertreter: Boult Wade Tennant LLP
(86) Internationale Anmeldenummer: PCT/EP2017/075004
(87) Internationale Veröffentlichungsnummer: WO 2018/065375

(56) Entgegenhaltungen:
- US-A1- 2013 154 428
- US-A1- 2015 028 714
- US-A1- 2015 054 374
- US-A1- 2015 076 953

## Beschreibung

Die Erfindung betrifft eine Spulenwicklung zum Einlegen in radial offene Nuten von Statoren oder Rotoren elektrischer Maschinen, wobei die Spulenwicklung aus einer Anzahl miteinander verflochtener Drähte besteht, die mehrfach gegenläufig so umgebogen werden, dass parallel zueinander liegende Schenkel der Drähte, die zum Ausfüllen der Nuten bestimmt sind, durch Wicklungsköpfe verbunden sind, die stirnseitig über die Rotoren oder Statoren überstehen, wobei die Wicklungsköpfe jeweils zwei schräg verlaufende Wicklungskopfabschnitte mit einer dazwischenliegenden Wicklungskopfspitze aufweisen, und wobei die Drähte in einer Längsrichtung der Spulenwicklung hintereinander angeordnet sind. Die Erfindung betrifft des Weiteren einen Stator oder einen Rotor mit einer solchen Spulenwicklung.

Rotoren oder Statoren für Elektromotoren weisen einen im Wesentlichen zylindrischen oder hohlzylindrischen Grundkörper mit über den Umfang gleichmäßig verteilt angeordneten, radialen Nuten auf, die sich in axialer Richtung über den gesamten Grundkörper erstrecken, und in die eine Spulenwicklung aus mehreren Drähten, die unterschiedlichen Phasen zugeordnet sind, eingelegt ist.

Die Spulenwicklung erstreckt sich im Wesentlichen in einer Längsrichtung, die der Umfangsrichtung des Stators entspricht. Die Drähte sind jeweils mehrfach gegenläufig umgebogen, so dass jeder Draht mehrere parallel zueinander und in Längsrichtung hintereinander liegende Schenkel aufweist. Die Schenkel sind jeweils durch dachartige Wicklungsköpfe verbunden, so dass die Drähte in Längsrichtung einen im Wesentlichen wellenförmigen bzw. zick-zack-förmigen Verlauf aufweisen. Die parallelen Schenkel sind jeweils zum Einlegen in die Nuten bestimmt. Die Wicklungsköpfe stehen jeweils stirnseitig über den Grundkörper über.

Die Drähte sind in einer Längsrichtung, die der Umfangsrichtung des Stators oder Rotors entspricht, hintereinander angeordnet, wobei sich die einzelnen Drähte im Bereich der Schenkel in einer quer zur Längsrichtung sowie quer zu Erstreckungsrichtung der parallelen Schenkel verlaufenden Richtung überlappen können. In eingelegtem Zustand in die Nuten alternieren die Schenkel dadurch zwischen einer inneren und einer benachbarten äußeren Radiallage im Stator. Diese Drähte sind mehreren Phasen zugeordnet, wobei benachbarte Drahtgruppen mit jeweils mehreren Drähten gebildet sein können, die jeweils eine Phase haben. In einer Nut sind vorzugsweise jeweils nur Drähte einer Phase angeordnet.

Der Wirkungsgrad des Stators, und somit des Elektromotors, hängt unter anderem von der Anordnung der Drähte im Stator, also von der Art der Spulenwicklung, ab. Zum einen ist eine möglichst dichte Spulenwicklung erwünscht. Zum anderen soll verhindern werden, dass sich die Drähte berühren oder sich Drähte mit verschiedenen Phasen negativ beeinflussen.

Aus dem Stand der Technik ist grundsätzlich bekannt, dass vereinzelt Drähte einen höheren Wicklungskopf aufweisen, so dass diese zwischen zwei in Längsrichtung aufeinanderfolgenden Schenkeln jeweils einen in Längsrichtung vor diesen Drähten liegenden Draht überspringen können, so dass sich die Reihenfolge der Drähte im Bereich der Schenkel in einem nachfolgenden Abschnitt ändert. Um größere Sprünge zu erzielen, beispielsweise um zwei oder mehr Drähte zu überspringen, ist es erforderlich, die Höhe der Wicklungsköpfe entsprechend zu erhöhen, wodurch die Bauhöhe des Stators bzw. des Rotors zunimmt.

Die US 2015/0076953 A1 zeigt eine aus Einzelelementen aufgebaute Wicklung, bei der an einer Umfangsstelle die stetige Abfolge durchbrochen ist. Innerhalb einer Drahtgruppe erfolgt kein Wechsel der Ordnung.

Die US 2015/0054374 A1 und die US 2013/0154428 A1 zeigen Wicklungen, bei denen die Drähte nicht in Gruppen und Drahtgruppen unterteilt sind. Die abweichenden Nutsprünge erfolgen entsprechend nicht innerhalb von Untergruppen.

Die US 2015/0028714 A1 zeigt eine Schleifenwicklung, bei der die Drähte wiederum nicht Gruppen und phasenorientierten Drahtgruppen zusammengefasst sind.

Aufgabe der Erfindung ist es, eine Spulenwicklung bereitzustellen, die einen beliebigen Austausch der Reihenfolge der Drähte bei einer geringen Bauhöhe des Rotors bzw. des Stators ermöglicht. Aufgabe der Erfindung ist es des Weiteren, eine Spulenwicklung bereitzustellen, die einen verbesserten Wirkungsgrad eines Stators oder Rotors bei gleichen Abmessungen ermöglicht. Des Weiteren soll ein Stator oder Rotor mit einer solchen Spulenwicklung bereitgestellt werden, der bei einer geringen Bauhöhe einen möglichst hohen Wirkungsgrad aufweist.

Zur Lösung der Aufgabe ist eine Spulenwicklung zum Einlegen in radial offene Nuten von Statoren oder Rotoren elektrischer Maschinen vorgesehen, die die Merkmale des Anspruches 1 aufweist. Es erfolgen also über die gesamte Länge der Spulenwicklung Wechsel in der Reihenfolge der Drähte.

In einer Richtung senkrecht zur Längsrichtung und senkrecht zur Erstreckungsrichtung der Schenkel liegt ein aufwärtsgerichteter Schenkel eines ersten Drahtes hinter einem abwärtsgerichteten Schenkel eines zweiten Drahtes.

Die Drähte sind in eine erste und eine zweite Gruppe aufgeteilt, wobei die Drähte einer Gruppe zumindest im Bereich der Schenkel unmittelbar benachbart und in Längsrichtung der Spulenwicklung hintereinander angeordnet sind, wobei jeweils ein aufwärtsgerichteter Schenkel eines Drahtes einer ersten Gruppe hinter einem abwärtsgerichteten Schenkel eines Drahtes der zweiten Gruppe liegt.

Die Gruppen weisen jeweils Drähte auf, die den unterschiedlichen Phasen des Elektromotors zugeordnet sind. Zu jeder Phase ist also eine gerade Anzahl Drähte vorhanden, wobei jeder Gruppe die gleiche Anzahl Drähte pro Phase zugeordnet ist. Die Schenkel zweier Drähte, die sich überlappen, sind jeweils der gleichen Phase zugeordnet. Dadurch wird verhindert, dass Drähte unterschiedlicher Phasen unmittelbar benachbart in einer Nut liegen und sich negativ beeinflussen.

Die Drähte einer Drahtgruppe haben die gleiche Phase. Die Reihenfolge der Drähte wird also nur innerhalb der jeweiligen Drahtgruppe, also innerhalb einer Phase gewechselt, so dass die Beeinflussung der Drähte unterschiedlicher Phasen untereinander minimiert wird. Der Wechsel der Reihenfolge der Drähte innerhalb einer Phase führt zu einer weiteren Leistungssteigerung der Spulenwicklung bzw. eines Stators mit einer solchen Spulenwicklung, da dadurch die Entstehung von Wirbelströmen, die die Leistung reduzieren würden, minimiert wird. Vorzugsweise erfolgen die Wechsel so, dass die unmittelbar benachbarten bzw. die in einer Nut des Stators oder Rotors liegenden Drähte sich nicht negativ beeinflussen.

Vorzugsweise weist jeder Draht zumindest einen Wickelkopf auf, der quer zur Längsrichtung so über den Wicklungskopf zumindest eines in Längsrichtung nachfolgenden Drahtes hinausragt, dass der Draht im dem dem Wicklungskopf nachfolgenden Bereich der Schenkel vor den beiden vor dem Wicklungskopf zunächst nachfolgenden Drähten liegt.

Die Wickelköpfe, die quer zur Längsrichtung so über den Wicklungskopf zumindest eines in Längsrichtung nachfolgenden Drahtes hinaus ragen, dass der Draht in dem dem Wicklungskopf nachfolgenden Bereich der Schenkel vor den beiden vor dem Wicklungskopf zunächst nachfolgenden Drähten liegt, sind vorzugsweise entlang eines Drahtes und/oder entlang der Spulenwicklung gleichmäßig verteilt angeordnet, so dass sich eine gleichmäßige Verteilung der Wechsel der Reihenfolge der Drähte ergibt.

Diese hinausragenden Wickelköpfe können einen Verbindungsabschnitt aufweisen, der sich im Wesentlichen in Längsrichtung erstreckt und/oder parallel zur Längsrichtung angeordnet ist, wobei die Verbindungsabschnitte insbesondere in einer parallel zur Längsrichtung angeordneten Ebene liegen. Mit einem solchen Verbindungsabschnitt ist ein Überspringen der beiden weiteren Drähte möglich, wobei die Bauhöhe des Stators bzw. des Rotors unabhängig von der Sprungweite, also der Anzahl der übersprungenen Drähte, ist. Die

Drähte können somit die beiden weiteren Drähte überspringen, so dass ein freier Wechsel der Reihenfolge der Drähte möglich ist. Die Reihenfolge der Drähte, insbesondere der Schenkel kann also so angepasst werden, dass ein möglichst hoher Wirkungsgrad eines Stators mit einer solchen Spulenwicklung erzielt werden kann, indem die Drähte der einzelnen Phasen so angeordnet werden, dass sich diese nicht negativ beeinflussen.

Jeder der Drähte hat mindestens einen Verbindungsabschnitt, so dass ein regelmäßiger Wechsel der Reihenfolge der Drähte im Bereich der Schenkel erfolgt. Vorzugsweise sind regelmäßige Sprünge der einzelnen Drähte vorgesehen, das heißt, der Wechsel der Reihenfolge der Drähte im Bereich der Schenkel erfolgt nach einem regelmäßigen sich wiederholenden Muster, so dass eine gleichmäßige Verteilung der Verbindungsabschnitte erfolgt. Die Sprünge der Drähte sind dabei so gewählt, dass sich die einzelnen Verbindungsabschnitte nicht kreuzen oder berühren. Die Verteilung der Sprünge wird beispielsweise abhängig von der Anzahl der Drähte, der Anzahl der Nuten oder der Anzahl und Verteilung der Phasen so gewählt, dass der Stator oder der Rotor einen möglichst hohen Wirkungsgrad aufweist.

Die Wicklungskopfspitzen der herausragenden Wickelköpfe liegen vorzugsweise in einer parallel zur Längsrichtung angeordneten Ebene und die übrigen Wicklungsköpfe befinden sich in einer von dieser Ebene beabstandeten Ebene. Der Abstand der Ebene der Wicklungskopfspitzen der herausragenden Wickelköpfe von den Schenkel ist größer ist als der Abstand der Ebene der übrigen Wicklungskopfspitzen von den Schenkeln. Die Drähte weisen vorzugsweise mehrere Abschnitte mit jeweils einem abwärtsgerichteten Schenkel, einem unteren Wicklungskopf, einem aufwärtsgerichteten Schenkel und einem oberen Wicklungskopf auf. Die Wicklungskopfspitzen der herausragenden Wickelköpfe sind jeweils an den unteren Wicklungsköpfen oder den oberen Wicklungsköpfen der Drähte vorgesehen.

Der Sprünge der Drähte erfolgen also nur auf einer der Stirnseiten des Stators oder Rotors, so dass die Bauhöhe auf der jeweils anderen Stirnseite des Stators oder Rotors nicht beeinflusst wird. Es ist aber auch möglich, dass auf beiden Stirnseiten, also sowohl in den oberen wie auch in den unteren Wicklungsköpfen regelmäßige Sprünge, also Verbindungsabschnitte, vorgesehen sind.

Vorzugsweise sind die Drähte in Drahtgruppen gegliedert, wobei die Drähte einer Drahtgruppe zumindest im Bereich der Schenkel unmittelbar benachbart und in einer Längsrichtung der Spulenwicklung hintereinander angeordnet sind, und wobei die Wicklungsköpfe des jeweils in Längsrichtung in einem Bereich eines Schenkel hinteren Drahtes einer Drahtgruppe quer zur Längsrichtung über die Wicklungsköpfe der andere Drähte der Drahtbaugruppe hinaus ragen und der hintere Draht am Wicklungskopf einen Verbindungsabschnitt aufweist, der parallel zur Längsrichtung angeordnet ist und die Wicklungskopfabschnitte verbindet, wobei der Verbindungsabschnitt so angeordnet ist, dass der hintere Draht im an den Wicklungskopf nachfolgenden Bereich der Schenkel vor den beiden übrigen Drähten liegt und den in Wickelrichtung vorderen Draht der Drahtgruppe bildet.

Die Drahtgruppen weisen jeweils drei Drähte auf, wobei die Reihenfolge der Drähte innerhalb der Drahtgruppen nach einem definierten, sich insbesondere wiederholenden Muster gewechselt wird.

Die Anzahl der Drähte ist vorzugsweise ein Vielfaches der Drahtgruppen und/oder der Anzahl der Drähte der einzelnen Drahtgruppen, so dass ein wiederkehrendes Muster der Drähte entsteht. Vorzugsweise ist der Wechsel der Drähte so gewählt, dass auch bei mehreren Umläufen der Spulenwicklung um den Stator oder Rotor Drähte mit gleicher Phase, also Drähte der gleichen Drahtgruppe oder zumindest Drähte mit der gleichen Phase in einer Nut liegen, so dass keine negative Beeinflussung von Drähten mit unterschiedlichen Phasen in einer Nut erfolgt. Es ist aber grundsätzlich nicht erforderlich, dass jeweils die gleichen Drähte in einer Nut liegen. Es ist ausreichend, dass die Drähte in einer Nut die gleiche Phase aufweisen.

Die Gruppen weisen jeweils zumindest zwei Drahtgruppen auf, wobei jeweils jeder Drahtgruppe der ersten Gruppe eine korrespondierende Drahtgruppe der zweiten Gruppe zugeordnet ist, wobei jeweils ein aufwärtsgerichteter Schenkel eines Drahtes einer Drahtgruppe der ersten Gruppe mit einem abwärtsgerichteten Schenkel eines Drahtes der korrespondierenden Drahtgruppe der zweiten Gruppe überlappt. Durch diese Anordnung der Drähte ist sichergestellt, dass in einer Nut jeweils Drähte mit der gleichen Phase liegen, so dass eine negative Beeinflussung der Drähte mit unterschiedlichen Phasen in einer Nut verhindert werden kann.

Die Drähte weisen an den Enden jeweils einen Anschlussabschnitt auf, wobei die Anschlussabschnitte vorzugsweise auf der Seite der oberen Wicklungsköpfe abstehen.

Zur Lösung der Aufgabe ist des Weiteren ein Stator oder Rotor für eine elektrische Maschine vorgesehen, wobei der Stator oder der Rotor radial offene Nuten aufweist. Der Rotor oder Stator weist eine vorgehend beschriebene Spulenwicklung auf, wobei die Schenkel der Drähte in den Nuten angeordnet sind.

Vorzugsweise entspricht die Anzahl der Nuten einem Vielfachen der Anzahl der Drähte der Spulenwicklung, so dass sich ein in Umfangsrichtung regelmäßiges Muster der Drähte ergibt. Dadurch kann die Spulenwicklung auch bei ausreichender Länge mehrfach um den Stator bzw. Rotor gewickelt werden, wobei jeweils Drähte der gleichen Drahtgruppen und/oder mit gleicher Phase in einer Nut liegen, so dass eine negative Beeinflussung der Drähte mit unterschiedlichen Phasen in einer Nut verhindert werden kann.

Die Anzahl der Abschnitte aus jeweils einem abwärtsgerichteten Schenkel, einem unteren Wicklungskopf, einem aufwärtsgerichteten Schenkel und einem oberen Wicklungskopf für jeden Draht ist so gewählt, dass in jeder Nut zumindest ein abwärtsgerichteter Schenkel eines Drahtes und ein aufwärtsgerichteter Schenkel eines zweiten Drahtes angeordnet ist. Es ergibt sich also in Umfangsrichtung eine gleichmäßige Verteilung der Schenkel in den Nuten. Vorzugsweise sind die Drähte Flachdrähte, so dass diese platzsparend in die nuten eingelegt werden können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Stator mit einer Spulenwicklung aus dem Stand der Technik;
- Fig. 2: eine Spulenwicklung aus dem Stand der Technik für den Stator aus Fig. 1;
- Fig. 3: eine schematische Darstellung einer Ausführungsform einer erfindungsgemäßen Spulenwicklung;
- Fig. 4: eine Darstellung der Drähte einer Drahtgruppe der Spulenwicklung aus Fig. 3;
- Fig. 5: eine Detailansicht der Spulenwicklung aus Fig. 3;
- Fig. 6: eine Detailansicht der Drähte aus Fig. 4 im Bereich der Detailansicht aus Fig. 5; und
- Fig. 7: eine Zuordnungstabelle der Drähte der Spulenwicklung aus Fig. 3 zu den Nuten eines Stators;
- Fig. 8: eine schematische Darstellung einer weiteren erfindungsgemäßen Spulenwicklung;
- Fig. 9: eine Zuordnungstabelle der Drähte der Spulenwicklung aus Fig. 8 zu den Nuten eines Stators;
- Fig.: 10eine schematische Darstellung einer weiteren Spulenwicklung;
- Fig. 11: eine Zuordnungstabelle der Drähte der Spulenwicklung aus Fig. 10 zu den Nuten eines Stators;
- Fig. 12: eine schematische Darstellung einer weiteren Spulenwicklung;
- Fig. 13: eine Zuordnungstabelle der Drähte der Spulenwicklung aus Fig. 12 zu den Nuten eines Stators.

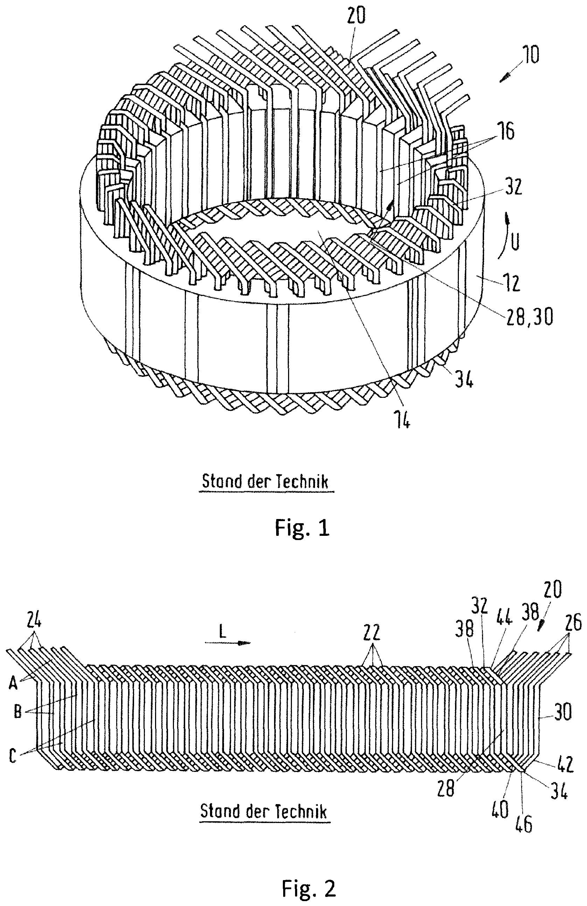

In Figur 1 ist allgemein ein Stator 10 mit einer aus dem Stand der Technik bekannten Spulenwicklung 20 gezeigt. Der Stator 10 hat einen Grundkörper 12 mit einem im Wesentlichen zylindrischen Aufnahmeraum 14 für einen hier nicht gezeigten Rotor. Der Grundkörper 12 weist mehrere, über den Umfang des Aufnahmeraums 14 verteilt angeordnete, sich vom Aufnahmeraum 14 radial nach außen in den Grundkörper 12 erstreckende Nuten 16 auf, die sich in axialer Richtung über die gesamte Länge des Stators 10 erstrecken.

Die in Figur 2 gezeigten Spulenwicklung 20 weist mehrere Drähte 22 auf, in der hier gezeigten Ausführungsform sechs Drähte 22, die an jedem Ende jeweils einen Anschlussabschnitt 24, 26 aufweisen. Die Drähte 22 sind jeweils mehrfach gegenläufig so umgebogen werden, dass diese parallel zueinander liegende Schenkel 28, 30 aufweisen, die durch Wicklungsköpfe 32, 34 miteinander verbunden sind. Die Schenkel 28, 30 sind jeweils in Längsrichtung L hintereinander angeordnet. Die Wicklungsköpfe 32, 34 weisen jeweils zwei schräg verlaufende Wicklungskopfabschnitte 36, 38, 40, 42 mit einer dazwischenliegenden Wicklungskopfspitze 44, 46 auf.

Die Drähte sind jeweils in einer Längsrichtung L der Spulenwicklung 20, die in eingelegtem Zustand der Spulenwicklung 20 in den Stator 10 im Wesentlichen der Umfangsrichtung U des Stators 10 entspricht, zumindest im Bereich der Schenkel 28, 30 hintereinander angeordnet. Vorzugsweise sind die Drähte drei Phase A, B, C zugeordnet. Es sind also jeder Phase A, B, C zwei Drähte 22 zugeordnet. Die Anzahl der Drähte 22 ist so gewählt, dass jeweils ein aufwärtsgerichteter Schenkel 28 eines Drahtes 22 in einer Richtung senkrecht zur Erstreckungsrichtung der Schenkel 28, 30 und senkrecht zur Längsrichtung L mit einem abwärtsgerichteten Schenkel 30 eines weiteren Drahtes 22 überlappt. In der hier gezeigten Ausführungsform überlappen sich jeweils die ersten drei und die letzten drei Drähte 22. Vorzugsweise überlappen sich jeweils Drähte 22 mit der gleichen Phase A, B, C im Bereich der Schenkel 28, 30.

Wie in Figur 1 zu sehen ist, sind die Schenkel 28 in die Nuten 16 eingelegt, wobei die Wicklungsköpfe 3, 34 in axialer Richtung über die Nuten 16, also über den Stator 10, hinausragen. Da sich jeweils ein aufwärtsgerichteter Schenkel 28 eines Drahtes 22 mit einem abwärtsgerichteten Schenkel 30 eines anderen Drahtes 22 überlappt, sind in jeder Nut 16 mindestens zwei Schenkel 28, 30 angeordnet, nämlich ein aufwärtsgerichteter Schenkel 28 eines ersten Drahtes 22 und ein abwärtsgerichteter Schenkel 30 eines zweiten Drahtes 22. In jeder Nut 16 ist die gleiche Anzahl Drähte 22 angeordnet, so dass sich in Umfangsrichtung U eine gleichmäßige Verteilung der Drähte 22 in den Nuten 16 ergibt.

Bei ausreichender Länge der Spulenwicklung 20 kann die Spulenwicklung 20 auch mit mehreren Wicklungen in den Stator 10 eingelegt sein. Unabhängig von der Anzahl der Wicklungen ist die Länge der Spulenwicklung 20 aber so gewählt, dass in jeder Nut 16 die gleiche Anzahl aufwärtsgerichteter Schenkel 28 und abwärtsgerichteter Schenkel 30 angeordnet ist.

Die Anzahl der Drähte 22 sowie die Anzahl der Phasen A, B, C kann ebenso beliebig geändert werden wie die Anzahl der Nuten 16, wobei lediglich auf eine in Umfangsrichtung gleichmäßige Verteilung der Nuten 16 sowie der Drähte 22 der einzelnen Phasen A, B, C zu achten ist. Grundsätzlich ist es bekannt, die Position einzelner Drähte 22 in Teilbereichen der Spulenwicklung 20 zu tauschen, wobei die Drähte 22 jeweils im Bereich eines Wicklungskopfes 28, 30 andere Drähte 22 überspringen.

Ein solches Überspringen wird beispielsweise dadurch erreicht, dass die Wicklungskopfabschnitte 36, 38, 40, 42 des Drahtes 22 länger ausgebildet sind, so dass der Abstand der Schenkel 28, 30, die durch den jeweiligen Wicklungskopf 32, 34 verbunden werden, ansteigt, insbesondere um den Betrag des Abstands der Nuten 16. Gleichzeitig sind die Wicklungskopfabschnitte 36, 38, 40, 42 des zu überspringenden Drahtes 22 kürzer ausgebildet, so dass sich der Abstand der Abstand der Schenkel 28, 30, die durch den jeweiligen Wicklungskopf 32, 34 verbunden werden, verkürzt, insbesondere um den Betrag des Abstandes der Nuten 16.

Ist ein Sprung eines Drahtes 22 über mehrere Drähte 22 gewünscht, ist eine entsprechende Verlängerung des jeweiligen Wicklungskopf 32, 34 erforderlich, wodurch die Bauhöhe des Stators in axialer Richtung zunehmen würde.

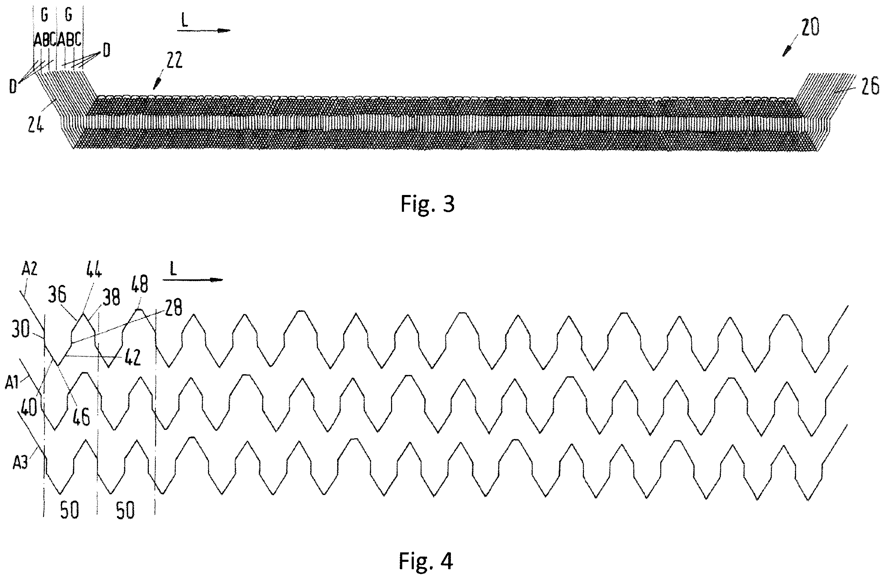

In Figur 3 ist eine erfindungsgemäße Spulenwicklung 20 gezeigt, die einen beliebigen Tausch der Reihenfolge der Drähte ermöglicht, wobei die Bauhöhe des Stators 10 weitestgehend unabhängig von der Anzahl der jeweils übersprungenen Drähte 22 ist.

In der vorliegenden Ausführungsform weist die Spulenwicklung 20 eine Anzahl von 18 Drähten 22 auf und ist für einen Stator 10 mit 90 Nuten und 10 Polen ausgebildet.

Die Drähte 22 sind insgesamt drei verschiedenen Phasen A, B, C zugeordnet. Wie nachfolgend im Detail erläutert wird, ist die Spulenwicklung 20 so ausgebildet, dass der Stator 10 insgesamt in Umfangsrichtung U drei Wicklungen aufweist, also in jeder Nut 16 insgesamt sechs Schenkel 28, 30 der Drähte 22 liegen.

Selbstverständlich kann die grundlegende Idee auch auf Spulenwicklungen 20 bzw. Statoren 10 mit einer andere Anzahl Drähte 22 und Nuten16 angewendet werden. Auch die Anzahl der Wicklungen und der Phasen A, B, C kann beliebig im Rahmen der nachfolgend erläuterten Randbedingungen geändert werden.

Die Drähte 22 sind grundsätzlich in zwei Gruppen G mit jeweils 9 Drähten unterteilt, wobei jede Gruppe G drei Drahtgruppen D mit jeweils drei Drähten 22 aufweist. Die Drähte 22 einer Drahtgruppe D sind jeweils der gleichen Phase A, B, C zugeordnet, wobei jede Gruppe G jeweils eine Drahtgruppe D aufweist, die einer der drei Phasen A, B, C zugeordnet ist. Es ergeben sich somit sechs Drahtgruppen D mit jeweils drei Drähten 22, die den drei Phasen A, B, C zugeordnet sind.

Im Folgenden werden die Drähte 22 der ersten Phase auch mit A1 bis A6, die Drähte 22 der zweiten Phase mit B1 bis B6 und die Drähte 22 der dritten Phase mit C1 bis C6 bezeichnet. Der ersten Gruppe G gehören die Drähte A1 bis A3, B1 bis B3 und C1 bis C3 an. Der zweiten Gruppe G gehören die Drähte A4 bis A6, B4 bis B6 und C4 bis C6 an.

Die Drähte 22 einer Drahtgruppe D sind jeweils in Längsrichtung L benachbart angeordnet, wobei die Drähte 22 zumindest im Bereich der Schenkel 28, 30 hintereinander angeordnet sind. Die Drahtgruppen D einer Gruppe G sind jeweils hintereinander angeordnet, wobei die Reihenfolge der Drahtgruppen D untereinander nicht wechselt. Die Drahtgruppen D der zweiten Gruppe G schließen in Längsrichtung unmittelbar an die erste Gruppe G an, wobei die Reihenfolge der Drahtgruppen D innerhalb der zweiten Gruppe G der Reihenfolge der Drahtgruppen D der ersten Gruppe G entspricht.

Der Abstand der Drähte 22 sowie die Länge der Wicklungskopfabschnitte 36, 38, 40, 42 ist grundsätzlich so gewählt, dass sich die abwärtsgerichteten Schenkel 30 der Drahtgruppen D der ersten Gruppe jeweils mit den aufwärtsgerichteten Schenkeln 28 der Drahtgruppe D der zweiten Gruppe, die die gleiche Phase A, B, C aufweist, in einer Richtung quer zur Längsrichtung L und quer zur Erstreckungsrichtung der Schenkel 28, 30 überlappen. Es überlappen sich also stets Schenkel 28, 30 bzw. Drähte 22, die die gleiche Phase A, B, C aufweisen.

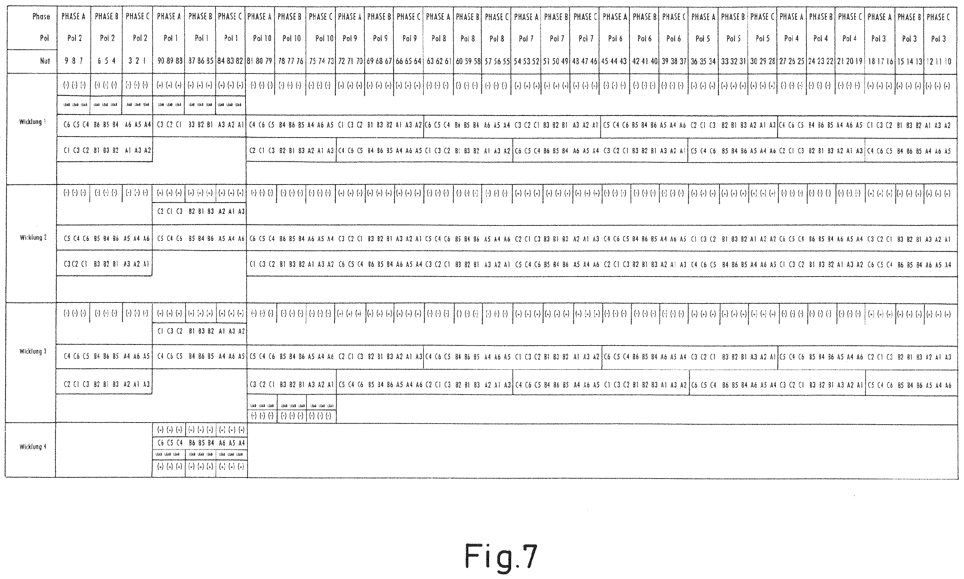

Die jeweils neun abwärtsgerichteten Schenkel 30 einer Gruppe G sowie die neun überlappenden aufwärtsgerichteten Schenkel 28 der anderen Gruppe G bilden in den Nuten16 eingelegt gemeinsam einen Pol des Stators 10 (siehe auch Figur 7), so dass sich bei 90 Nuten insgesamt 10 Pole ergeben.

Da die Anzahl der Nuten ein Vielfaches der Anzahl der Drähte 22 bzw. ein Vielfaches der Anzahl der Drähte 22 einer Gruppe G ist, sind auch bei mehreren Wicklungen der Spulenwicklung 20 um den Stator 10 jeweils nur Drähte 22 einer Phase A, B, C in einer Nut 16, so dass eine negative Beeinflussung durch Drähte 22 mit verschiedenen Phasen A, B, C in einer Nut 16 verhindert wird.

In der hier gezeigten Ausführungsform ist die Länge der Spulenwicklung 20 so gewählt, dass diese mit drei vollständigen Wicklungen in den Stator 10 bzw. in die Nuten16 des Stators 10 eingelegt ist. Es befinden sich also in jeder Nut sechs Drähte 22 mit jeweils der gleichen Phase A, B, C.

Der Verlauf der einzelnen Drähte 22 wird nachfolgend in den Figuren 4 bis 6 anhand der Drähte A1, A2, A3 erläutert. Die Drähte A4 bis A6, B1 bis B6 sowie C1 bis C6 haben jeweils einen analogen Verlauf.

Innerhalb der Drahtgruppe D wechselt jeweils die Reihenfolge der Drähte A1, A2, A3 in den oberen Wicklungsköpfen 32, so dass in in Längsrichtung L aufeinanderfolgenden Bereichen der aufwärtsgerichteten Schenkel 28 jeweils die Reihenfolge der Drähte A1, A2, A3 in Längsrichtung L variiert. Der im Bereich der aufwärtsgerichteten Schenkel 28 in Längsrichtung L jeweils hintere Draht A1, A2, A3 ist dazu im oberen Wicklungskopf so angeordnet ist, dass dieser im folgenden Bereich der abwärtsgerichteten Schenkel 30 in Längsrichtung vor den zwei übrigen Drähten A1, A2, A3 der jeweiligen Drahtgruppe D liegt.

Dieses Muster wiederholt sich in jedem Abschnitt 50 einer Drahtgruppe D bestehend aus aufwärtsgerichteten Schenkeln 28, oberen Wicklungsköpfen 32, abwärtsgerichteten Schenkeln 30 und unteren Wicklungsköpfen 34, so dass die Reihenfolge der Drähte 22 im Bereich der Schenkel 28, 30 innerhalb einer Drahtgruppe D über die gesamte Länge der Spulenwicklung 20 wiederholt wechselt. Für die Drahtgruppe D bestehend aus den Drähten A1, A2, A3 ergibt sich somit in aufeinanderfolgenden Abschnitten 50 die sich wiederholende Reihenfolge A1-A2-A3, A2-A3-A1, A3-A1-A2.

Bei einer herkömmlichen Spulenwicklung 20 mit 18 Drähten 22 würde ein Draht 22 jeweils in jeder neunten Nut liegen. In der hier gezeigten Ausführungsform überspringt der in Längsrichtung L hintere Draht 22 jeweils zwei weitere Nuten 16, springt also zur ausgehend von der letzten Nut 16 elften Nut 16, während die zwei übersprungen Drähte 22 dieser Drahtgruppe D jeweils eine Nut 16 weniger überspringen, also in die jeweils achte Nut 16 springen. Da die Drähte 22 einer Drahtgruppe D jeweils abwechselnd die oben genannten Sprünge ausführen, gleichen sich diese nach drei Abschnitten der Drähte wieder aus, so dass die Drähte 22 einer Drahtgruppe D stets in Längsrichtung L unmittelbar benachbart liegen und sich die Reihenfolge der Drahtgruppen D untereinander nicht ändert.

Bei einer Drahtgruppe D mit drei Drähten A1, A2, A3 wiederholt sich somit nach jeweils drei Abschnitten bzw. nach sechs Polen die Reihenfolge der Drähte A1, A2, A3 im Bereich der Schenkel 28, 30. Da der Stator 10 insgesamt 10 Pole aufweist, beginnt die zweite und dritte Wicklung jeweils mit einer anderen Reihenfolge der Drähte 22 in den einzelnen Abschnitten, so dass jeder Draht 22 einer Phase A, B, C nur einmal in jeder Nut 16 liegt, wobei aber stets nur Drähte einer Phase A, B, C in einer Nut 16 liegen. Die Verteilung der Drähte 22 in den einzelnen Nuten kann Figur 7 entnommen werden.

Die beschriebene Verteilung führt zu einer verbesserten Leistung des Stators 10, da negative Beeinflussungen der Drähte 22 mit unterschiedlichen Phasen A, B, C, beispielsweise durch Wirbelströme, verhindert werden.

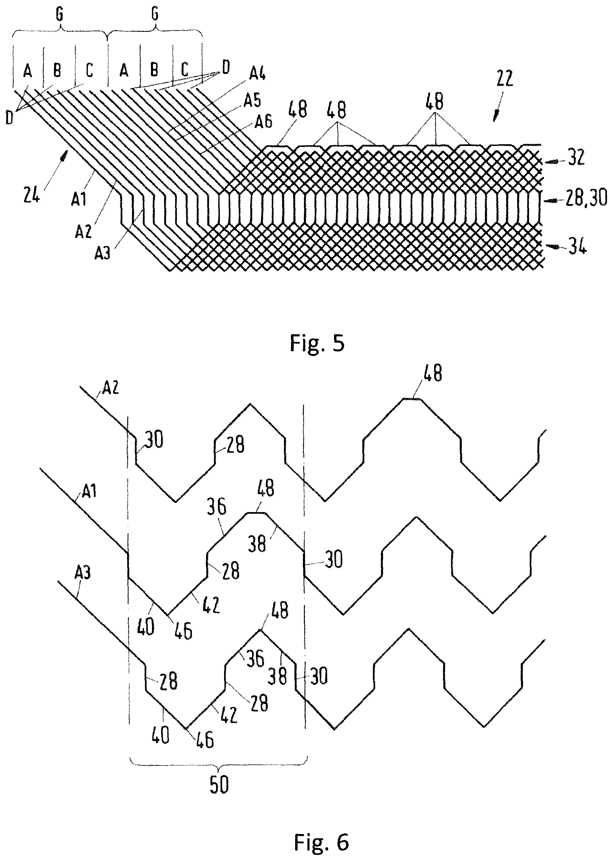

Um die Bauhöhe des Stators 10 zu reduzieren, weist der obere Wicklungskopf 32 des Drahtes 22, der die jeweils andere beiden Drähte 22 einer Drahtgruppe D überspringt, jeweils eine abweichende Geometrie auf, die in den Figuren 4 und 6 im Detail gezeigt ist. Zwischen den Wicklungskopfabschnitten 36, 38 ist jeweils zusätzlich ein Verbindungsabschnitt 48 vorgesehen, der sich im Wesentlichen in Längsrichtung L erstreckt bzw. in der hier gezeigten Ausführungsform parallel zur Längsrichtung L verläuft. Die angrenzenden Wicklungskopfabschnitte 36, 38 sind geringfügig verlängert, so dass der Verbindungsabschnitt 48 in axialer Richtung, also quer zur Längsrichtung L über die Wicklungskopfspitzen 44 der darunterliegenden Wicklungsköpfe 32 hinaus ragt. Die Länge des Verbindungsabschnitts 48 in Längsrichtung L ist dabei so gewählt, dass der Abstand der Schenkel 28, 30, die der Wicklungskopf 32 verbindet, um den doppelten Abstand zwischen zwei Nuten16 bzw. zwischen zwei benachbarten Schenkeln 28, 30 vergrößert wird, so dass durch den Verbindungsabschnitt 48 die zwei übrigen Drähte 22 dieser Drahtgruppe übersprungen werden.

Alternativ können die Verbindungsabschnitte 48 auch gekrümmt sein, wobei sich die Verbindungsabschnitte 48 im Wesentlichen in Längsrichtung L erstrecken.

Wie in den Figuren 4 und 6 zu sehen ist, liegen die Verbindungsabschnitte 48 jeweils in einer parallel zur Längsachse L verlaufenden Ebene. Die Wicklungskopfspitzen44 der Wicklungsköpfe 32, die übersprungen werden, liegen in einer Ebene, die von der Ebene der Verbindungsabschnitte 48 beabstandet ist, wobei der Abstand der Ebene der Verbindungsabschnitte 48 von den Schenkel 28, 30 größer ist als der Abstand der Ebene der Wicklungskopfspitzen 44 von den Schenkeln 28, 30. Die Wicklungskopfspitzen 44 der oberen Wicklungsköpfe 32 befinden sich also in zwei parallelen Ebenen.

Die Ausbildung der Wicklungsköpfe 32 mit einem abgeflachten Verbindungsabschnitt 48 ermöglicht grundsätzlich einen beliebigen Wechsel der Reihenfolge der Drähte 22 innerhalb einer Drahtgruppe D, wobei die Bauhöhe des Stators 10 unabhängig von der Anzahl der übersprungenen Drähte 22 ist. Es ist lediglich darauf zu achten, dass sich die Verbindungsabschnitte 48 nicht gegenseitig beruhen oder kreuzen.

Grundsätzlich kann die Anzahl der Drähte 22 in jeder Gruppe G beliebig geändert werden. Insbesondere sind einzelne Drahtgruppen nicht erforderlich. Werden Drahtgruppen D mit unterschiedlichen Phasen vorgesehen, weisen vorzugsweise beide Gruppen G die gleiche Anzahl Drahtgruppen G sowie die gleiche Anzahl Drähte pro Drahtgruppe D auf. Um negative Einflüsse der Drähte 2 mit unterschiedlichen Phasen A, B, C zu vermeiden werden vorzugsweise jeweils nur Drähte 22 mit gleicher Phase A, B, C in eine Nut 16 eingelegt.

Grundsätzlich wiederholt sich der Wechsel der Reihenfolge der Drähte 22 innerhalb einer Drahtgruppe D oder innerhalb einer Gruppe G über die gesamte Länge der Spulenwicklung 20, so dass sich ein wiederholendes Muster bei der Reihenfolge der Drähte 22 ergibt. Vorzugsweise ist dieses Muster so gewählt, dass im Stator jeweils nur Drähte mit gleicher Phase A, B, C in einer Nut 16 liegen, wobei vorzugsweise immer wechselnde Drähte 22 in einer Nut 16 liegen.

In den Figuren 3 bis 7 ist eine Spulenwicklung 2 für ein Stator 10 mit 90 Nuten dargestellt, wobei der Stator drei Phase A, B, C sowie jeweils drei Drähte 22 pro Phase A, B, C aufweist. Insgesamt ergeben sich somit in Umfangsrichtung pro Wicklung 10 Pole bzw. 5 Polpaare. Ein Polpaar entspricht dabei einem Abschnitt beginnen von einem aufwärtsgerichteten Schenkel 28 eines Drahtes 22 bis zum in Umfangsrichtung nachfolgenden aufwärtsgerichteten Schenkel 28 des Drahtes 22.

Bei insgesamt drei Wicklungen der Spulenwicklung 2 liegen in jeder Nut 16 sechs Drähte. Da die Anzahl der Nuten ein Vielfaches der Drahtgruppen D, der Anzahl der Polpaare und der Anzahl der Drähte 22 pro Phase A, B, C sind, haben die Drähte 22 in einer Nut 16 jeweils die gleiche Phase A, b, C (siehe insbesondere Figur 7).

Der Grundgedanke der Erfindung ist auch auf Statoren 10 bzw. Rotoren mit einer anderen Anzahl Phasen A, B, C oder einer anderen Anzahl Nuten 16 anwendbar, solange die oben beschriebenen Grundsätze beachtet werden.

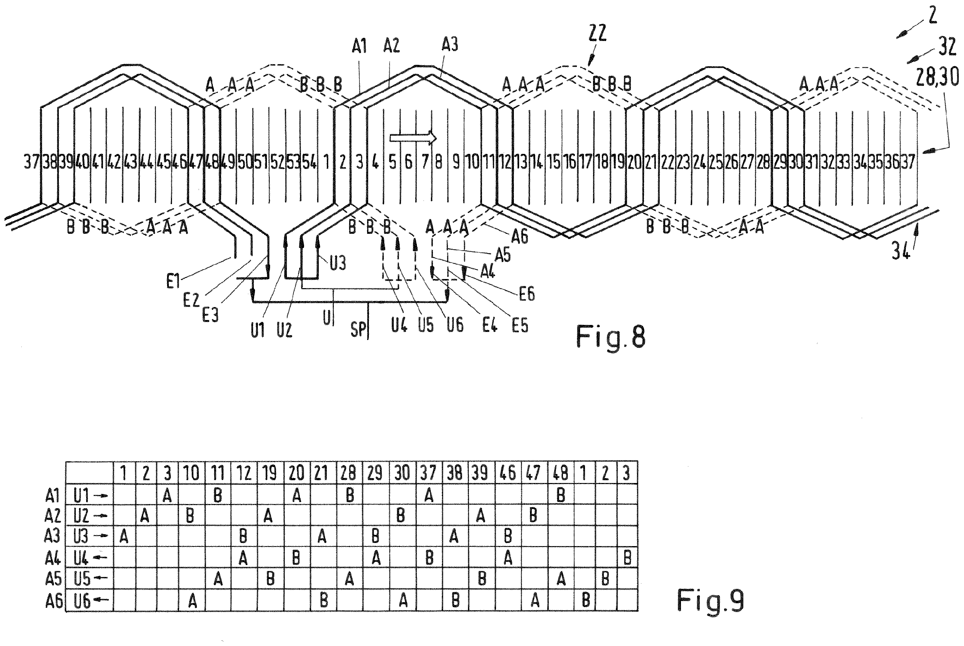

In den Figuren 8 und 9 ist ein weiteres Beispiel erläutert. Wie in Figur 8 zu sehen ist, hat die Spulenwicklung 2 ebenfalls zwei Drahtgruppen D mit jeweils drei Phasen A, B, C und jeweils drei Drähten 3. Die Wicklung ist abweichend vom Ausführungsbeispiel gemäß der Figuren 3 bis 7 aber für einen Stator mit 54 Nuten 16 vorgesehen.

In Figur 8 bezeichnen, wie auch in den nachfolgenden Beispielen, die Zahlen 1 bis 54 in den Bereichen der aufwärtsgerichteten bzw. abwärtsgerichteten Schenkel 28, 30 die durchnummerierten Nuten, in welche die Schenkel 28, 309 eingelegt werden, die sich jeweils bezogen auf Figur 8 rechts von der Zahl befinden.

Aus Gründen der Übersichtlichkeit sind nur die Drähte A1, A2, A3, A4, A5, A6 der Phase A dargestellt. Die nachfolgenden Erläuterungen gelten aber analog auch für die Drähte 22 der Phasen B und C.

Auch in diesem Ausführungsbeispiel ist die Anzahl der Nuten 16 ein Vielfaches der Anzahl der Drahtgruppen D, der Anzahl der Polpaare und der Anzahl der Drähte 22 pro Phase A, B, C, so dass jeweils nur Drähte einer Phase A, B, C in einer Nut 16 liegen. Bezogen auf die Drähte 22 der Phase A ist die Verteilung in den Nuten in Figur 9 dargestellt, wobei nur eine Wicklung dargestellt ist. Mit "A" ist jeweils die untere Lage innerhalb der Nut 16 bezeichnet, mit "B" die darüber liegende Lage eines Drahtes 22.

Mit U1, U2, U3, U4, U5, U6 bzw. E1, E2, E3, E4, E5, E6 sind jeweils die elektrischen Anschlüsse der Drähte A1, A2, A3, A4, A5, A6 dargestellt.

Wie in Figur 8 zu sehen ist, überspringt auch in dieser Ausführungsform in den oberen Wickelköpfen 32 der in Längsrichtung L jeweils letzte Draht 22 einer Phase A, B, C die jeweils in Längsrichtung L vor diesem legenden Drähte 22 der Phase A, B, C, so dass der Draht 22 im nachfolgenden Bereich der abwärtsgerichteten Schenkel 30 vor diesen beiden Drähten 22 liegt. In den unteren Wickelköpfen 34 erfolgt kein Überspringen einzelner Drähte. Diese Ausführungsform gleicht somit im Wesentlichen der in den Figuren 3 bis 7 gezeigten Ausführungsform, wobei lediglich die Anzahl der Nuten 16 und der Wicklungen abweicht.

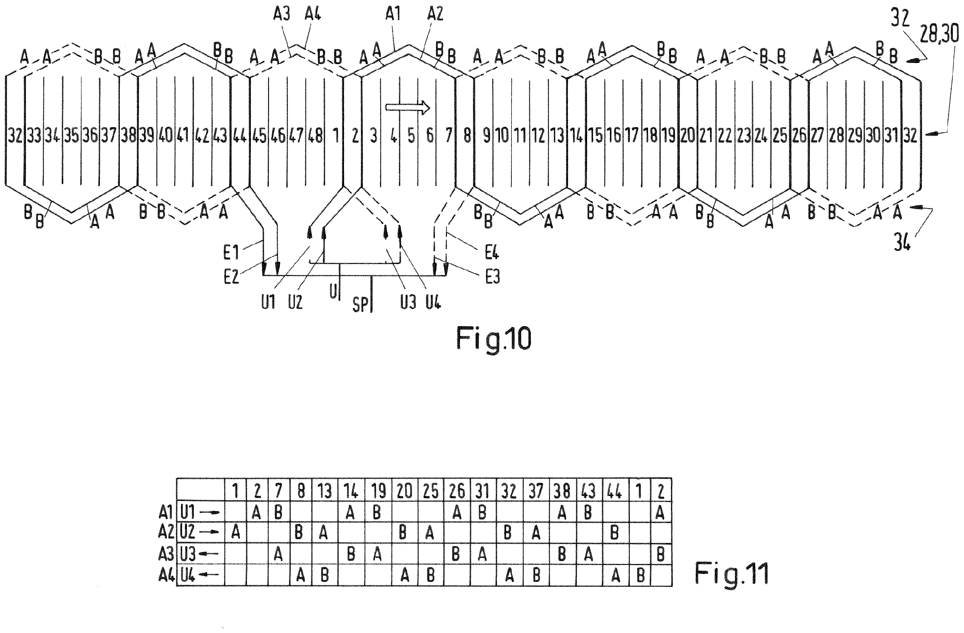

Das in den Figuren 10 und 11 dargestellte zur Erfindung nicht gehörende Vergleichsbeispiel ist für eine Verwendung in einem Stator mit 48 Nuten 16 vorgesehen. Auch diese Wicklung hat drei Phasen A, B, C, wobei die Phase A, B, C jeder Drahtgruppe D hier jeweils nur zwei Drähte 22 aufweisen. Insgesamt sind somit nur 12 Drähte vorgesehen, während in den vorgehenden Ausführungsbeispielen jeweils 18 Drähte 22 vorgesehen sind. Es ergeben sich somit acht Pole bzw. vier Polpaare.

Die elektrischen Anschlüsse der Phase A bzw. der Drähte A1, A2, A3, A4 sind analog zu den Figuren 8 und 9 mit U1, U2, U3, U4 bzw. E1, E2, E3, E4 bezeichnet.

Abweichend vom vorhergehenden Ausführungsbeispiel überspringen die Drähte einer Phase sich wechselweise jeweils sowohl in den oberen Wicklungsköpfen 32 wie auch in den unteren Wicklungsköpfen 34. Somit ist die Reihenfolge der Drähte 22 einer Phase A innerhalb einer Drahtgruppe D innerhalb der aufwärtsgerichteten Schenkel 28 bzw. der abwärtsgerichteten Schenkel 30 jeweils gleich. In den aufwärtsgerichteten Schenkeln 28 befindet sich in Längsrichtung L jeweils der Draht A2 vor dem Draht A1, in den abwärtsgerichteten Schenkeln 30 befindet sich jeweils der Draht A1 vor dem Draht A2.

Die Verteilung der Drähte 22 der Phase A in den Nuten 16 ist in Figur 11 dargestellt.

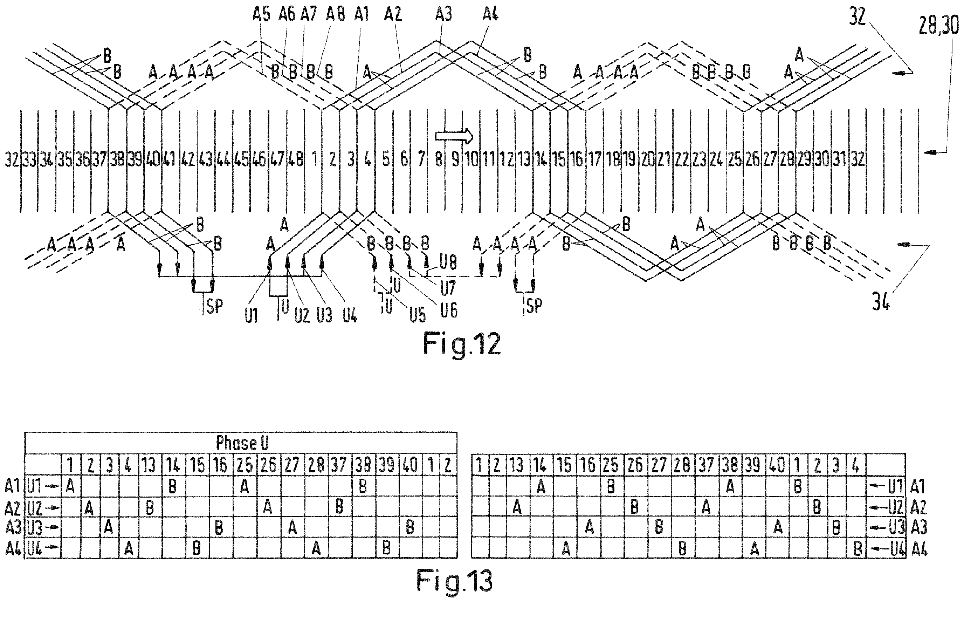

Die in den Figuren 12 und 13 dargestellte ebenfalls nicht zur Erfindung gehörende Spulenwicklung 2 ist ebenfalls für einen Stator mit 48 Nuten 16 vorgesehen. Abweichend zum in den Figuren 10 und 11 dargestellten Vergleichsbeispiel weisen die drei Phasen A, B, C jeder Drahtgruppe D jeweils vier Drähte 22 auf. Insgesamt sind somit 24 Drähte vorgesehen und es ergeben sich vier Pole bzw. zwei Polpaare.

Die elektrischen Anschlüsse der Phase A bzw. der Drähte A1, A2, A3, A4, A5, A6, A7, A8 sind mit U1, U2, U3, U4, U5, U6, U7, U8 bzw. E1, E2, E3, E4, E5, E6, E7, E8 bezeichnet.

Wie in Figur 12 zu sehen ist, überspringen ein in Längsrichtung L in einem Bereich der aufwärtsgerichteten Schenkel 28 hintere, erste Draht 22 den in Längsrichtung in diesem Bereich unmittelbar vor diesem angeordneten zweiten Draht 22. Des Weiteren überspringt der in diesem Bereich in Längsrichtung L dritte Draht 22, den in diesem Bereich vorderen, vierten Draht 22. Bei einer Reihenfolge im Bereich der aufwärtsgerichteten Schenkel 28 von A1 - A2 - A3 - A4 ergibt sich somit im in Längsrichtung L anschließenden Bereich der abwärtsgerichteten Schenkel 30 die Reihenfolge A2 - A1 - A4 - A3.

Analog zum vorhergehenden Vergleichsbeispiel erfolgt auch dieser Wechsel jeweils auf die gleiche Weise in den oberen und den unteren Wickelköpfen 32, 34. Der Wechsel erfolgt jeweils nur zwischen den Drähten A1 und A2 bzw. A3 und A4. Analog zum vorhergehenden Beispiel ist die Reihenfolge der Drähte A1, A2, A3, A4 in den Bereichen der aufwärtsgerichteten Schenkel 28 also jeweils gleich, nämlich A1 - A2 - A3 - A4, während in den Bereichen der abwärtsgerichteten Schenkel 30 jeweils die Reihenfolge der Drähte A1 und A2 bzw. A3 und A4 vertauscht ist.

Abweichend von den gezeigten Ausführungsbeispielen sind verschiedene Variationen der Anzahl der Drähte 22, der Anzahl der Nuten 16, der Anzahl der Phase A, B, C möglich. Ein Draht 22 einer Phase A, B, C einer Drahtgruppe D überspringt beide weitere Drähte der gleichen Phase A, B, C der Drahtgruppe D, die in Längsrichtung L in einem Bereich aufwärtsgerichteter oder abwärtsgerichteter Schenkel 28, 30 vor diesem Draht liegen. Es ist lediglich darauf zu achten, dass jeweils nur Drähte 22 der gleichen Phase A, B, C innerhalb der Drahtgruppe D übersprungen werden, sich also nur die Reihenfolge der Drähte 22 innerhalb der Phase A, B, C einer Drahtgruppe D ändert.

Vorzugsweise wechselt die Reihenfolge der Drähte 22 derart, dass sich jeweils nur Drähte einer Phase A, B, C in einer Nut befinden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein, solange sie den durch den unabhängigen Anspruch definierten Schutzbereich nicht verlassen.

### Bezugszeichenliste

- 10: Stator
- 12: Grundkörper
- 12: Grundkörper
- 12: Grundkörper
- 14: Aufnahmeraum
- 16: Nut
- 20: Spulenwicklung
- 22: Draht
- 24: Anschlussabschnitt
- 26: Anschlussabschnitt
- 28: aufwärtsgerichteter Schenkel
- 30: abwärtsgerichteter Schenkel
- 32: oberer Wicklungskopf
- 34: unterer Wicklungskopf
- 36: Wicklungskopfabschnitt
- 38: Wicklungskopfabschnitt
- 40: Wicklungskopfabschnitt
- 42: Wicklungskopfabschnitt
- 44: obere Wicklungskopfspitze
- 46: untere Wicklungskopfspitze
- 48: Verbindungsabschnitt
- 50: Abschnitt

- A, B, C: Phasen
- A1, A2, A3: Drähte einer Drahtgruppe
- A4, A5, A6: Drähte einer Drahtgruppe
- B1, B2, B3: Drähte einer Drahtgruppe
- B4, B5, B6: Drähte einer Drahtgruppe
- C1, C2, C3: Drähte einer Drahtgruppe
- C4, C5, C6: Drähte einer Drahtgruppe
- D: Drahtgruppen
- G: Gruppen der Drähte
- L: Längsrichtung
- U: Umfangsrichtung

## Patentansprüche

1. Spulenwicklung (2) zum Einlegen in radial offene Nuten (16) von Statoren (10) oder Rotoren elektrischer Maschinen, wobei die Spulenwicklung (20) aus einer Anzahl miteinander verflochtener Drähte (22) besteht, die mehrfach gegenläufig so umgebogen werden, dass parallel zueinander liegende Schenkel (28, 30) der Drähte (22), die zum Ausfüllen der Nuten (16) bestimmt sind, durch Wicklungsköpfe (32, 34) verbunden sind, die stirnseitig über die Statoren (10) oder Rotoren überstehen, wobei die Wicklungsköpfe (32, 34) jeweils zwei schräg verlaufende Wicklungskopfabschnitte (36, 38, 40, 42) mit einer dazwischenliegenden Wicklungskopfspitze (44, 46) aufweisen, wobei die Drähte (22) in einer Längsrichtung (L) der Spulenwicklung (20) hintereinander angeordnet sind,
**wobei**
die Drähte (22) in eine erste und eine zweite Gruppe (G) geteilt sind, wobei die Drähte (22) einer Gruppe (G) den unterschiedlichen Phasen des Elektromotors zugeordnet sind und zu jeder Phase eine gerade Anzahl Drähte vorhanden ist, wobei jeder Gruppe die gleiche Anzahl Drähte pro Phase zugeordnet ist, und die Drähte (22) einer Gruppe (G) zumindest im Bereich der Schenkel (28, 30) unmittelbar benachbart und in Längsrichtung (L) der Spulenwicklung (20) hintereinander angeordnet sind, wobei jeweils ein aufwärtsgerichteter Schenkel (28) eines Drahtes (22) der ersten Gruppe (G) mit einem abwärtsgerichteten Schenkel (30) eines Drahtes (22) der zweiten Gruppe (G) überlappt, die Gruppen (G) jeweils zumindest zwei Drahtgruppen (D) aufweisen, die Drahtgruppen (D) jeweils drei Drähte (22) aufweisen, wobei jeweils jeder Drahtgruppe (D) der ersten Gruppe (G) eine korrespondierende Drahtgruppe (D) der zweiten Gruppe (G) zugeordnet ist, wobei jeweils ein aufwärtsgerichteter Schenkel (28) eines Drahtes (22) einer Drahtgruppe (D) der ersten Gruppe (G) mit einem abwärtsgerichteten Schenkel (30) eines Drahtes (22) der korrespondierenden Drahtgruppe (D) der zweiten Gruppe (G) überlappt,
die Drähte einer Drahtgruppe (D) die gleiche Phase (A, B, C) haben und in Längsrichtung (L) über die gesamte Länge der Spulenwicklung verteilt Wickelköpfe (32, 34) zumindest eines ersten Drahtes (22) einer Drahtgruppe D quer zur Längsrichtung (L) so über die Wicklungsköpfe (28, 30) der in Längsrichtung (L) nachfolgenden beiden weiteren Drähte (22) der Drahtgruppe D hinaus ragen, dass der erste Draht (22) in einem dem Wicklungskopf (32, 34) nachfolgenden Bereich der Schenkel (28, 30) vor den beiden vor dem Wicklungskopf (32, 34) zunächst nachfolgenden beiden weiteren Drähten (22) liegt, wobei die Reihenfolge der Drähte (22) nur innerhalb der jeweiligen Drahtgruppe (D), also innerhalb einer Phase (A, B, C) gewechselt wird, so dass die Beeinflussung der Drähte (22) unterschiedlicher Phasen (A, B, C) untereinander minimiert wird.

2. Spulenwicklung nach Anspruch 1, **dadurch gekennzeichnet, dass** jeder Draht (22) zumindest einen Wickelkopf (32, 34) aufweist, der quer zur Längsrichtung (L) so über den Wicklungskopf (28, 30) zumindest eines in Längsrichtung (L) nachfolgenden Drahtes (22) hinausragt, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt.

3. Spulenwicklung nach einem der Ansprüche 1 und 2, **dadurch gekennzeichnet, dass** die Wickelköpfe (32, 34), die quer zur Längsrichtung (L) so über den Wicklungskopf (28, 30) zumindest eines in Längsrichtung (L) nachfolgenden Drahtes (22) hinaus ragen, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt, entlang eines Drahtes und/oder entlang der Spulenwicklung gleichmäßig verteilt angeordnet sind.

4. Spulenwicklung nach einem der Ansprüche 1 bis 3, **dadurch gekennzeichnet, dass** die Wickelköpfe (32, 34), die quer zur Längsrichtung (L) so über den Wicklungskopf (28, 30) zumindest eines in Längsrichtung (L) nachfolgenden Drahtes (22) hinaus ragen, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt, einen Verbindungsabschnitt (48) aufweisen, der sich im Wesentlichen in Längsrichtung (L) erstreckt und/oder parallel zur Längsrichtung (L) angeordnet ist, wobei die Verbindungsabschnitte (48) insbesondere in einer parallel zur Längsrichtung (L) angeordneten Ebene liegen.

5. Spulenwicklung nach einem der vorhergehenden Ansprüche, **dadurch gekennzeichnet, dass** sich die Wicklungskopfspitzen (44, 46) der Wickelköpfe (32, 34), die quer zur Längsrichtung (L) so über den Wicklungskopf (28, 30) zumindest eines in Längsrichtung (L) nachfolgenden Drahtes (22) hinausragen, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt, in einer parallel zur Längsrichtung (L) angeordneten Ebene liegen, und dass sich die übrigen Wicklungsköpfe (32, 34) in einer von dieser Ebene beabstandeten Ebene befinden, wobei der Abstand der Ebene der Wicklungskopfspitzen (44, 46) der Wickelköpfe (32, 34), die quer zur Längsrichtung (L) so über den Wicklungskopf (28, 30) zumindest eines in Längsrichtung (L) nachfolgenden Drahtes (22) hinaus ragen, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt, von den Schenkel (28, 30) größer ist als der Abstand der Ebene der übrigen Wicklungskopfspitzen (32, 34) von den Schenkeln (28, 30).

6. Spulenwicklung nach einem der Ansprüche 4 und 5, **dadurch gekennzeichnet, dass** die Drähte (22) mehrere Abschnitte (50) mit jeweils einem abwärtsgerichteten Schenkel (30), einem unteren Wicklungskopf (34), einem aufwärtsgerichteten Schenkel (28) und einem oberen Wicklungskopf (32) aufweisen, und dass die Wicklungskopfspitzen (44, 46) der Wickelköpfe (32, 34), die quer zur Längsrichtung (L) so über den Wicklungskopf (28, 30) der in Längsrichtung (L) nachfolgenden Drähte (22) hinaus ragen, dass der Draht (22) in dem dem Wicklungskopf (32, 34) nachfolgenden Bereich der Schenkel (28, 30) vor den beiden vor dem Wicklungskopf (32, 34) zunächst nachfolgenden Drähten (22) liegt, jeweils an den unteren Wicklungsköpfen (34) oder den oberen Wicklungsköpfen (32) der Drähte (22) vorgesehen sind.

7. Spulenwicklung nach einem der vorhergehenden Ansprüche, **dadurch gekennzeichnet, dass** die Drähte (22) in Drahtgruppen (D) gegliedert sind, wobei die Drähte (22) einer Drahtgruppe (D) zumindest im Bereich der Schenkel (28, 30) unmittelbar benachbart und in einer Längsrichtung (L) der Spulenwicklung (22) hintereinander angeordnet sind, und dass die Wicklungsköpfe (32, 34) des jeweils in Längsrichtung (L) in einem Bereich eines Schenkel (28, 30) hinteren Drahtes (22) einer Drahtgruppe (D) quer zur Längsrichtung (L) über die Wicklungsköpfe (32, 34) der anderen Drähte (22) der Drahtbaugruppe (D) hinaus ragen und dass der hintere Draht (22) jeweils einen Verbindungsabschnitt (48) aufweist, der parallel zur Längsrichtung (L) angeordnet ist und die Wicklungskopfabschnitte (36, 38, 40, 42) verbindet, wobei der Verbindungsabschnitt (48) so angeordnet ist, dass der hintere Draht (22) im an den Wicklungskopf (32, 34) nachfolgenden Bereich der Schenkel (28, 30) vor den übrigen Drähten (22) liegt und den in Längsrichtung (L) vorderen Draht (22) der Drahtgruppe (D) bildet, wobei die Verbindungsabschnitte (48) der Drähte (22) insbesondere in einer parallel zur Längsrichtung (L) angeordneten Ebene liegen.

8. Spulenwicklung nach einem der vorhergehenden Ansprüche, **dadurch gekennzeichnet, dass** die Anzahl der Drähte (22) ein Vielfaches der Drahtgruppen (D) und/oder der Anzahl der Drähte (22) der einzelnen Drahtgruppen (D) ist.

9. Spulenwicklung nach einem der vorhergehenden Ansprüche, **dadurch gekennzeichnet, dass** die Drähte (22) an den Enden jeweils einen Anschlussabschnitt (24, 26) aufweisen, wobei die Anschlussabschnitte (24, 26) auf der Seite der oberen Wicklungsköpfe (32) abstehen.

10. Stator (10) oder Rotor für eine elektrische Maschine wobei der Stator (10) oder der Rotor radial offene Nuten (16) aufweist, **dadurch gekennzeichnet, dass** eine Spulenwicklung (20) nach einem der vorhergehenden Ansprüche vorgesehen ist, wobei die Schenkel (28, 30) der Drähte (22) in den Nuten (16) angeordnet sind.

11. Stator oder Rotor nach Anspruch 10, **dadurch gekennzeichnet, dass** die Anzahl der Nuten (16) einem Vielfachem der Anzahl der Drähte (22) der Spulenwicklung (20) entspricht.

12. Stator nach einem der Ansprüche 10 und 11, **dadurch gekennzeichnet, dass** die Anzahl der Abschnitte (50) aus jeweils einem abwärtsgerichteten Schenkel (30), einem unteren Wicklungskopf (34), einem aufwärtsgerichteten Schenkel (28) und einem oberen Wicklungskopf (32) für jeden Draht (22) so gewählt ist, dass in jeder Nut (16) zumindest ein abwärtsgerichteter Schenkel (30) eines Drahtes (22) und ein aufwärtsgerichteter Schenkel (28) eines zweiten Drahtes (22) angeordnet ist.

## Claims

1. Coil winding (2) for insertion into radially open slots (16) of stators (10) or rotors of electrical machines, wherein the coil winding (20) consists of a number of wires (22) which are braided with one another and are bent several times in opposite directions such that limbs (28, 30), which lie parallel in relation to one another, of the wires (22), which are intended to fill the slots (16), are connected by winding overhangs (32, 34) which project beyond the end sides of the stators (10) or rotors, wherein the winding overhangs (32, 34) each have two obliquely running winding overhang sections (36, 38, 40, 42) with a winding overhang tip (44, 46) lying in between, wherein the wires (22) are arranged one behind the other in a longitudinal direction (L) of the coil winding (20), **wherein**
the wires (22) are split into a first and a second group (G), wherein the wires (22) of a group (G) are associated with the different phases of the electric motor and there is an even number of wires for each phase, wherein the same number of wires per phase is associated with each group, and the wires (22) of one group (G) are arranged immediately adjacent at least in the region of the limbs (28, 30) and one behind the other in the longitudinal direction (L) of the coil winding (20), wherein in each case an upwardly directed limb (28) of a wire (22) of the first group (G) overlaps a downwardly directed limb (30) of a wire (22) of the second group (G),
the groups (G) each have at least two wire groups (D), the wire groups (D) each have three wires (22), wherein a corresponding wire group (D) of the second group (G) is in each case associated with each wire group (D) of the first group (G), wherein in each case an upwardly directed limb (28) of a wire (22) of a wire group (D) of the first group (G) overlaps a downwardly directed limb (30) of a wire (22) of the corresponding wire group (D) of the second group (G), that the wires of a wire group (D) have the same phase (A, B, C) and, in a manner distributed over the entire length of the coil winding in the longitudinal direction (L), winding overhangs (32, 34) of at least one wire (22) protrude transversely in relation to the longitudinal direction (L) beyond the winding overhang (28, 30) of the two further wires (22) of the wire group D which follow in the longitudinal direction (L) such that the first wire (22), in a region of the limbs (28, 30) which follows the winding overhang (32, 34), lies in front of the two wires (22) which first follow in front of the winding overhang (32, 34), wherein the order of the wires (22) is only changed within the respective wire group (D), i.e. within one phase (A, B, C), such that the interference of the wires (22) of different phases (A, B, C) with one another is minimised.

2. Coil winding according to claim 1, **characterised in that** each wire (22) has at least one winding overhang (32, 34) which protrudes transversely in relation to the longitudinal direction (L) beyond the winding overhang (28, 30) of at least one wire (22) which follows in the longitudinal direction (L) such that the wire (22), in the region of the limbs (28, 30) which follows the winding overhang (32, 34), lies in front of the two wires (22) which first follow in front of the winding overhang (32, 34).

3. Coil winding according to any of claims 1 and 2, **characterised in that** the winding overhangs (32, 34), which protrude transversely in relation to the longitudinal direction (L) beyond the winding overhang (28, 30) of at least one wire (22) which follows in the longitudinal direction (L) such that the wire (22), in the region of the limbs (28, 30) which follows the winding overhang (32, 34), lies (L) in front of the two wires (22) which first follow in front of the winding overhang (32, 34), are arranged in a manner distributed uniformly along a wire and/or along the coil winding.

4. Coil winding according to any of claims 1 to 3, **characterised in that** the winding overhangs (32, 34) which protrude transversely in relation to the longitudinal direction (L) beyond the winding overhang (28, 30) of at least one wire (22) which follows in the longitudinal direction (L) such that the wire (22), in the region of the limbs (28, 30) which follows the winding overhang (32, 34), lies in front of the two wires (22) which first follow in front of the winding overhang (32, 34), have a connecting section (48) which extends substantially in the longitudinal direction (L) and/or is arranged parallel in relation to the longitudinal direction (L), wherein the connecting sections (48) lie, in particular, in a plane which is arranged parallel in relation to the longitudinal direction (L).

5. Coil winding according to any of the preceding claims, **characterised in that** the winding overhang tips (44, 46) of the winding overhangs (32, 34), which protrude transversely in relation to the longitudinal direction (L) beyond the winding overhang (28, 30) of at least one wire (22) which follows in the longitudinal direction (L) such that the wire (22), in the region of the limbs (28, 30) which follows the winding overhang (32, 34), lies in front of the two wires (22) which first follow in front of the winding overhang (32, 34), lie in a plane which is arranged parallel in relation to the longitudinal direction (L), and **in that** the other winding overhangs (32, 34) are located in a plane which is at a distance from said plane, wherein the distance of the plane of the winding overhang tips (44, 46) of the winding overhangs (32, 34), which protrude transversely in relation to the longitudinal direction (L) beyond the winding overhang (28, 30) of at least one wire (20) which follows in the longitudinal direction (L) such that the wire (22), in the region of the limbs (28, 30) which follows the winding overhang (32, 34), lies in front of the two wires (22) which first follow in front of the winding overhang (32, 34), from the limbs (28, 30) is greater than the distance of the plane of the other winding overhang tips (32, 34) from the limbs (28, 30).

6. Coil winding according to any of claims 4 and 5, **characterised in that** the wires (22) have multiple sections (50) each having a downwardly directed limb (30), a lower winding overhang (34), an upwardly directed limb (28) and an upper winding overhang (32), and **in that** the winding overhang tips (44, 46) of the winding overhangs (32, 34), which protrude transversely in relation to the longitudinal direction (L) beyond the winding overhang (28, 30) of the wire (22) which follows in the longitudinal direction (L) such that the wire (22), in the region of the limbs (28, 30) which follows the winding overhang (32, 34), lies in front of the two wires (22) which first follow in front of the winding overhang (32, 34), are each provided on the lower winding overhangs (34) or the upper winding overhangs (32) of the wires (22).

7. Coil winding according to any of the preceding claims, **characterised in that** the wires (22) are subdivided into wire groups (D), wherein the wires (22) of one wire group (D) are arranged immediately adjacent at least in the region of the limbs (28, 30) and one behind the other in a longitudinal direction (L) of the coil winding (22), and **in that** the winding overhangs (32, 34) of the wire (22) of a wire group (D) that is respectively at the rear in the longitudinal direction (L) in a region of a limb (28, 30) protrude transversely in relation to the longitudinal direction (L) beyond the winding overhangs (32, 34) of the other wires (22) of the wire assembly (D), and **in that** the rear wire (22) in each case has a connecting section (48) which is arranged parallel in relation to the longitudinal direction (L) and connects the winding overhang sections (36, 38, 40, 42), wherein the connecting section (48) is arranged such that the rear wire (22), in the region of the limbs (28, 30) that follows the winding overhang (32, 34), lies in front of the other wires (22) and forms the wire (22) of the wire group (D) which is at the front in the longitudinal direction (L), wherein the connecting sections (48) of the wires (22) lie, in particular, in a plane which is arranged parallel in relation to the longitudinal direction (L).

8. Coil winding according to any of the preceding claims, **characterised in that** the number of wires (22) is a multiple of the wire groups (D) and/or of the number of wires (22) of the individual wire groups (D).

9. Coil winding according to any of the preceding claims, **characterised in that** the wires (22) have a connector section (24, 26) at each of the ends,
wherein the connector sections (24, 26) project on the side of the upper winding overhangs (32).

10. Stator (10) or rotor for an electrical machine, wherein the stator (10) or the rotor has radially open slots (16), **characterised in that** a coil winding (20) according to any of the preceding claims is provided, wherein the limbs (28, 30) of the wires (22) are arranged in the slots (16).

11. Stator or rotor according to claim 10, **characterised in that** the number of slots (16) corresponds to a multiple of the number of wires (22) of the coil winding (20).

12. Stator or rotor according to any of claims 10 and 11, **characterised in that** the number of sections (50) comprising in each case a downwardly directed limb (30), a lower winding overhang (34), an upwardly directed limb (28) and an upper winding overhang (32) for each wire (22) is selected such that at least one downwardly directed limb (30) of one wire (22) and one upwardly directed limb (28) of a second wire (22) are arranged in each slot (16).

## Revendications

1. Enroulement de bobine (2) pour l'insertion dans des rainures (16) radialement ouvertes de stators (10) ou rotors de machines électriques, dans lequel l'enroulement de bobine (20) se compose d'un nombre de fils (22) entrelacés entre eux qui sont recourbés plusieurs fois dans des directions opposées, de sorte que des branches (28, 30) se trouvant parallèlement les unes aux autres des fils (22) qui sont destinées au remplissage des rainures (16), soient reliées par des têtes d'enroulement (32, 34) qui font saillie côté avant des stators (10) ou rotors, dans lequel les têtes d'enroulement (32, 34) présentent respectivement deux sections de tête d'enroulement (36, 38, 40, 42) s'étendant en biais avec une pointe de tête d'enroulement (44, 46) se trouvant au milieu, dans lequel les fils (22) sont agencés dans un sens longitudinal (L) de l'enroulement de bobine (20) les uns derrière les autres, **dans lequel**
les fils (22) sont divisés en un premier et un second groupe (G), dans lequel les fils (22) d'un groupe (G) sont associés aux différentes phases du moteur électrique et un nombre pair de fils est présent à chaque phase, dans lequel à chaque groupe est associé le même nombre de fils par phase, et les fils (22) d'un groupe (G) sont agencés de manière directement contiguë au moins dans la zone des branches (28, 30) et les uns derrière les autres dans le sens longitudinal (L) de l'enroulement de bobine (20), dans lequel respectivement une branche (28) dirigée vers le haut d'un fil (22) du premier groupe (G) recouvre une branche (30) dirigée vers le bas d'un fil (22) du second groupe (G),
les groupes (G) présentent respectivement au moins deux groupes de fil (D), les groupes de fil (D) présentent respectivement trois fils (22), dans lequel respectivement à chaque groupe de fil (D) du premier groupe (G) est associé un groupe de fil (D) correspondant du second groupe (G), dans lequel respectivement une branche (28) dirigée vers le haut d'un fil (22) d'un groupe de fil (D) du premier groupe (G) recouvre une branche (30) dirigée vers le bas d'un fil (22) du groupe de fil (D) correspondant du second groupe (G), de sorte que les fils d'un groupe de fil (D) ont la même phase (A, B, C) et dans le sens longitudinal (L) répartis sur toute la longueur de l'enroulement de bobine, des têtes d'enroulement (32, 34) d'au moins un premier fil (22) d'un groupe de fil D transversalement au sens longitudinal (L) font saillie au-delà des têtes d'enroulement (28, 30) des deux autres fils (22) qui se suivent dans le sens longitudinal (L) du groupe de fil D, de sorte que le premier fil (22), dans une zone qui suit la tête d'enroulement (32, 34) des branches (28, 30), se trouve avant les deux autres fils (22) qui suivent tout d'abord avant la tête d'enroulement (32, 34), dans lequel l'ordre des fils (22) est changé seulement dans le groupe de fil (D) respectif, donc dans une phase (A, B, C), de sorte que l'influence des fils (22) de différentes phases (A, B, C) entre elles soit minimisée.

2. Enroulement de bobine selon la revendication 1, **caractérisé en ce que** chaque fil (22) présente au moins une tête d'enroulement (32, 34) qui fait saillie transversalement au sens longitudinal (L) au-delà de la tête d'enroulement (28, 30) d'au moins un fil (22) qui suit dans le sens longitudinal (L), de sorte que le fil (22), dans la zone des branches (28, 30) qui suit la tête d'enroulement (32, 34), se trouve avant les deux fils (22) qui suivent tout d'abord avant la tête d'enroulement (32, 34).

3. Enroulement de bobine selon l'une quelconque des revendications 1 et 2, **caractérisé en ce que** les têtes d'enroulement (32, 34) qui font saillie transversalement au sens longitudinal (L) au-delà de la tête d'enroulement (28, 30) d'au moins un fil (22) qui suit dans le sens longitudinal (L), de sorte que le fil (22), dans la zone des branches (28, 30) qui suit la tête d'enroulement (32, 34), se trouve avant les deux fils (22) qui suivent tout d'abord avant la tête d'enroulement (32, 34), sont agencées réparties uniformément le long d'un fil et/ou le long de l'enroulement de bobine.

4. Enroulement de bobine selon l'une quelconque des revendications 1 à 3, **caractérisé en ce que** les têtes d'enroulement (32, 34) qui font saillie transversalement au sens longitudinal (L) au-delà de la tête d'enroulement (28, 30) d'au moins un fil (22) qui suit dans le sens longitudinal (L), de sorte que le fil (22), dans la zone qui suit la tête d'enroulement (32, 34) des branches (28, 30), se trouve avant les deux fils (22) qui suivent tout d'abord avant la tête d'enroulement (32, 34), présentent une section de liaison (48) qui s'étend sensiblement dans le sens longitudinal (L) et/ou est agencée parallèlement au sens longitudinal (L), dans lequel les sections de liaison (48) se trouvent en particulier dans un plan agencé parallèlement au sens longitudinal (L).

5. Enroulement de bobine selon l'une quelconque des revendications précédentes, **caractérisé en ce que** les pointes de tête d'enroulement (44, 46) des têtes d'enroulement (32, 34) qui font saillie transversalement au sens longitudinal (L) au-delà de la tête d'enroulement (28, 30) d'au moins un fil (22) qui suit dans le sens longitudinal (L), de sorte que le fil (22), dans la zone qui suit la tête d'enroulement (32, 34) des branches (28, 30) se trouve avant les deux fils (22) qui suivent tout d'abord avant la tête d'enroulement (32, 34), se trouvent dans un plan agencé parallèlement au sens longitudinal (L), et **en ce que** les têtes d'enroulement (32, 34) restantes se trouvent dans un plan espacé de ce plan, dans lequel la distance du plan des pointes de tête d'enroulement (44, 46) des têtes d'enroulement (32, 34) qui font saillie transversalement au sens longitudinal (L) au-delà de la tête d'enroulement (28, 30) d'au moins un fil (11) qui suit dans le sens longitudinal (L), de sorte que le fil (22), dans la zone qui suit la tête d'enroulement (32, 34) des branches (28, 30), se trouve avant les deux fils (22) qui suivent tout d'abord avant la tête d'enroulement (32, 34), depuis la branche (28, 30) est supérieure à la distance du plan des pointes de tête d'enroulement (32 34) restantes depuis les branches (28, 30).

6. Enroulement de bobine selon l'une quelconque des revendications 4 et 5, **caractérisé en ce que** les fils (22) présentent plusieurs sections (50) avec respectivement une branche (30) dirigée vers le bas, une tête d'enroulement (34) inférieure, une branche dirigée vers le haut (28) et une tête d'enroulement (32) supérieure, et **en ce que** les pointes de tête d'enroulement (44, 46) des têtes d'enroulement (32, 34) qui font saillie transversalement au sens longitudinal (L) au-delà de la tête d'enroulement (28, 30) des fils (22) qui suivent dans le sens longitudinal (L), de sorte que le fil (22), dans la zone qui suit la tête d'enroulement (32, 34) des branches (28, 30) se trouve avant les deux fils (22) qui suivent tout d'abord avant la tête d'enroulement (32, 34), sont prévues respectivement sur les têtes d'enroulement (34) inférieures ou les têtes d'enroulement (32) supérieures des fils (22).

7. Enroulement de bobine selon l'une quelconque des revendications précédentes, **caractérisé en ce que** les fils (22) sont divisés en groupes de fil (D), dans lequel les fils (22) d'un groupe de fil (D) sont agencés de manière directement contiguë au moins dans la zone des branches (28, 30) et les uns derrière les autres dans un sens longitudinal (L) de l'enroulement de bobine (22), et **en ce que** les têtes d'enroulement (32, 34) du fil (22) arrière d'un groupe de fil (D) respectivement dans le sens longitudinal (L) dans une zone d'une branche (28, 30) font saillie transversalement au sens longitudinal (L) au-delà des têtes d'enroulement (32, 34) des autres fils (22) du groupe de fil (D) et **en ce que** le fil arrière (22) présente respectivement une section de liaison (48) qui est agencée parallèlement au sens longitudinal (L) et relie les sections de tête d'enroulement (36, 38, 40, 42), dans lequel la section de liaison (48) est agencée de sorte que le fil (22) arrière, dans la zone qui suit sur la tête d'enroulement (32, 34) des branches (28, 30), se trouve avant les fils (22) restants et forme le fil (22) avant du groupe de fil (D) dans le sens longitudinal (L), dans lequel les sections de liaison (48) des fils (22) se trouvent en particulier dans un plan agencé parallèlement au sens longitudinal (L).

8. Enroulement de bobine selon l'une quelconque des revendications précédentes, **caractérisé en ce que** le nombre des fils (22) est un multiple de groupes de fil (D) et/ou du nombre des fils (22) des groupes de fil (D) individuels.

9. Enroulement de bobine selon l'une quelconque des revendications précédentes, **caractérisé en ce que** les fils (22) présentent au niveau des extrémités respectivement une section de raccordement (24, 26),
dans lequel les sections de raccordement (24, 26) font saillie sur le côté des têtes d'enroulement (32) supérieures.

10. Stator (10) ou rotor pour une machine électrique, dans lequel le stator (10) ou le rotor présente des rainures (16) radialement ouvertes, **caractérisé en ce qu'**un enroulement de bobine (20) selon l'une quelconque des revendications précédentes est prévu, dans lequel les branches (28, 30) des fils (22) sont agencées dans les rainures (16).

11. Stator ou rotor selon la revendication 10, **caractérisé en ce que** le nombre de rainures (16) correspond à un multiple du nombre des fils (22) de l'enroulement de bobine (20).

12. Stator selon l'une quelconque des revendications 10 et 11, **caractérisé en ce que** le nombre de sections (50) est choisi à partir respectivement d'une branche (30) dirigée vers le bas, une tête d'enroulement (34) inférieure, une branche (28) dirigée vers le haut et une tête d'enroulement (32) supérieure pour chaque fil (22), de sorte qu'au moins une branche (30) dirigée vers le bas d'un fil (22) et une branche (28) dirigée vers le haut d'un second fil (22) soient agencées dans chaque rainure (16).
